(19) Europäisches Patentamt / European Patent Office / Office européen des brevets

(11) **EP 2 113 957 B1**

(12) **EUROPEAN PATENT SPECIFICATION**

(45) Date of publication and mention
of the grant of the patent:
**15.03.2017 Bulletin 2017/11**

(51) Int Cl.:
*H01M 10/0525* (2010.01)     *H01M 4/58* (2010.01)
*H01M 4/62* (2006.01)

(21) Application number: **09251126.0**

(22) Date of filing: **17.04.2009**

(54) **Positive electrode for lithium secondary cell and lithium secondary cell using the same**

Positive Elektrode für Lithiumsekundärzelle und Lithiumsekundärzelle damit

Électrode positive pour pile secondaire au lithium et pile secondaire au lithium l'utilisant

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **22.04.2008 JP 2008111143**

(43) Date of publication of application:
**04.11.2009 Bulletin 2009/45**

(73) Proprietor: **Dai-Ichi Kogyo Seiyaku Co., Ltd.**
**Shimogyo-ku, Kyoto-shi**
**Kyoto 600-8873 (JP)**

(72) Inventors:
• **Higashizaki, Tetsuya**
**Kyoto-shi,**
**Kyoto 600-8873 (JP)**
• **Ishiko, Eriko**
**Kyoto-shi,**
**Kyoto 600-8873 (JP)**

(74) Representative: **Treeby, Philip David William et al**
**Maucher Jenkins**
**26 Caxton Street**
**London SW1H 0RJ (GB)**

(56) References cited:
EP-A- 1 184 920     EP-A- 1 881 546
WO-A-2007/100918    CA-A1- 2 506 104
JP-A- 2001 068 093

• **DOEFF M M ET AL: "Optimization of carbon coatings on LiFePO4" JOURNAL OF POWER SOURCES, ELSEVIER, AMSTERDAM, NL, vol. 163, no. 1, 7 December 2006 (2006-12-07), pages 180-184, XP025084684 ISSN: 0378-7753 [retrieved on 2006-12-07]**
• **C. DELACOURT, P. POIZOT, S. LEVASSEUR, C. MASQUELIER: "Size effects on carbon-free LiFePO4 powders", ELECTROCHEMICAL AND SOLID-STATE LETTERS, vol. 9, no. 7, 12 May 2006 (2006-05-12), pages A352-A355,**

Remarks:
The file contains technical information submitted after the application was filed and not included in this specification

**Description**

BACKGROUND OF THE INVENTION

Field of the Invention

The present invention relates to a positive electrode for a lithium secondary cell and a lithium secondary cell using the same.

Related Art

A lithium ion secondary cell is a compact lightweight rechargeable cell having a large charge capacity per unit volume or unit weight, is widely applied to a portable phone, a notebook computer, a portable digital assistant (PDA), a video camera, a digital still camera and the like, and is now essential for various portable devices that are compact and lightweight and consume relatively large electric power. Owing to the characteristics, a lithium secondary cell is considered to be one of key technologies of rechargeable cells for energy saving and energy storage. Examples of the field of energy saving include application to vehicle installation, such as an electric vehicle (EV) and a hybrid electric vehicle (HEV) aiming at reduction of carbon dioxide emission, and examples of the field of energy storage include a stationary electric power plant for effective utilization of wind power electric power generation, solar electric power generation and night-time electric power. Further enhancement on capability and capacity and reduction in cost are being demanded for a lithium secondary cell for practical application in these fields. Safety of a lithium secondary cell is also receiving attention in view of accidents and callback of a lithium secondary cell occurring in recent years, and therefore enhancement on reliability is also being demanded for a lithium secondary cell.

The most popular positive electrode material for a lithium secondary cell is lithium cobaltate, which is widely used in consumer products owing to excellent capabilities thereof. However, the material is expensive and fluctuates in cost since it contains a rare metal, and the material also has problems, such as low safety. Examples of other materials for a positive electrode include lithium nickelate and lithium manganate. Lithium nickelate is excellent in high capacity and high temperature cycle property, but has a problem in safety. Lithium manganate is excellent in safety, such as overcharging property, and is low in cost, but disadvantageously has low capacity and deteriorated high temperature cycle property. A nickel-manganese-cobalt material is developed and subjected to practical use, and the cost and the safety are improved by the material. However, there is still a problem in cost since the material contains cobalt, and furthermore, the material is in sufficient in safety.

Under the circumstances, olivine type lithium oxide is receiving attention as a material that is low in environmental load and of low cost owing to abundant resources therefor. Olivine type lithium oxide is expected as a positive electrode material since the material has a high capacity and is excellent in heat stability on charging, thereby enhancing the safety on abnormal states, such as overcharging.

These positive electrode active substances are used in a positive electrode with an electroconductive substance, such as carbon black and acetylene black being incorporated therein, since the substances are generally low in electron conductivity (see, for example, JP-A-2002-216770, JP-A-2002-117902, JP-A-2002-117907 and JP-A-2006-128119). Specifically, the positive electrode is produced in such a manner that an active substance, a conductive agent and a binder are mixed with a dispersion medium to form a paste in a slurry form, which is coated on a positive electrode collector with a coater, followed by evaporating the dispersion medium.

Upon preparing a coating composition of a lithium-containing olivine type phosphate salt, there is a problem that the use of an electroconductive substance having been ordinarily used, such as carbon black and acetylene black, in a large amount lowers the flowability of the composition for forming a positive electrode and increases the viscosity thereof in a short period of time, thereby failing to perform a coating operation.

In the case where the amount of the conductive agent is decreased for solving the problem, the electron conductivity of the positive electrode composition layer is largely decreased to increase the internal impedance, which provides a problem of insufficient performance of the cell. In the case where a large amount of the solvent is used in order to improve the flowability, on the other hand, the solvent in a large amount is evaporated in the drying step to cause cracking, which deteriorates adhesion to the collector. Furthermore, the thickness of the positive electrode composition layer is decreased, which provides a problem of decrease in energy density of the cell.

The positive electrode is generally produced by a pressing step performed after the drying step. However, the conventional positive electrode composition cannot be sufficiently packed and bound by the pressing step, which provides possibility of defects, such as detachment.

JP-A-2006-128119 discloses such an attempt that two kinds of conductive agent having different specific surface areas are used for enhancing the density of the positive electrode composition, thereby improving the capability of the cell. However, even though a paste is prepared by using the conductive agents having different specific surface areas, the problems of reduction in flowability and increase in viscosity are not yet avoided.

EP 1,184,920 discloses a cathode active material improved in electron conductivity and a non-aqueous electrolyte cell employing this cathode active material, and which is aimed at improvements in cell capacity and cyclic characteristics. The cathode active material is composed of a compound having the general formula $Li_xFePO_4$ where $0 < x \leq 1.0$, and a carbon material, with the carbon content per unit weight being not less than 3 wt% and with the powder density being not lower than 2.2 $g/cm^3$.

EP 1,881,546 discloses a positive electrode for a non-aqueous electrolytic secondary battery and includes: 1) a current collector, 2) an active material layer formed on a surface of the current collector, the active material layer including: i) a positive electrode active material having an average particle diameter of less than or equal to 5 micrometers, ii) a conductivity assistant including: a) a particulate conductive material having: a primary particle diameter of less than or equal to 70 nm, and an aggregate size of less than 1 micrometer, and b) a long chain conductive material, and iii) a binder.

## SUMMARY OF THE INVENTION

According to the present invention there is provided a coating composition for a positive electrode for a lithium secondary cell, the coating composition comprising $Li_xFePO_4$ ($0 < x < 2$) as a positive electrode active substance, a conductive agent and a binder, the conductive agent having an average particle diameter of from 3 to 20 $\mu$m measured by a laser diffraction scattering method, the average particle diameter of primary particles of the positive electrode active substance being from 30 to 250nm, and the average particle diameter of secondary particles of the positive electrode active substance being 5$\mu$m or less.

The average particle diameter referred herein means a median diameter (50% diameter, D50), i.e., a particle diameter corresponding to 50% of the accumulated distribution curve.

The conductive agent may be at least one member selected from the group consisting of electroconductive carbon substances in a flaky form or a fibrous form.

The coating composition for the positive electrode may further contain, along with the conductive agent, at least one second conductive component selected from the group consisting of electroconductive carbon substance components having an average particle diameter of 1 [micro]m or less measured by a laser diffraction scattering method.

The invention also relates to, in another aspect, a lithium secondary cell containing one of the aforementioned positive electrodes for a lithium secondary cell.

In the positive electrode for a lithium secondary cell of the invention, the flowability of the coating composition can be enhanced without the use of a solvent in a large amount, and the viscosity thereof can be suppressed from being increase with the lapse of time, whereby the coating composition can be coated stably.

Furthermore, the solid content of the coating composition can be increased, whereby the thickness of the positive electrode composition layer can be easily increased, which is advantageous from the standpoint of enhancement in energy density.

In the case where an electroconductive carbon substance in a flaky form or a fibrous form is used as the conductive agent, or in the case where one or two or more kinds of the second conductive component selected from the group consisting of an electroconductive carbon substance components having an average particle diameter of 1 $\mu$m or less measured by a laser diffraction scattering method is used in combination with the conductive agent, the packing rate and the cohesiveness in the pressing step for producing the positive electrode can be improved to prevent defects, such as detachment, from occurring.

## DESCRIPTION OF THE PREFERRED EMBODIMENTS

1. Positive Electrode Active Substance

The positive electrode active substance used in the invention is represented by the formula (I):

$$Li_xMPO_4 \qquad (I)$$

wherein M represents a metallic atom containing at least one member selected from the group consisting of Co, Ni, Fe, Mn, Cu, Mg, Zn, Ti, Al, Si, B and Mo; and $0 < x < 2$. The substance wherein M contains Fe is preferred, and $LiFePO_4$ is particularly preferred. Olivine type $LiFePO_4$ has a high theoretical capacity of 170 mAh/g, and is inexpensive, whereby the production cost of the cell can be largely decreased. Furthermore, it has substantially no toxicity to human body and environments, and has various excellent characteristics as a positive electrode material, such as difficulty in oxygen desorption and high heat stability. Accordingly, the positive electrode active substance is preferably $LiFePO_4$ solely or is a material mainly containing $LiFePO_4$.

As raw materials for the positive electrode active substance, examples of the Li source include a lithium salt,

such as LiOH, $Li_2CO_3$, $CH_3COOLi$ and LiCl, examples of Fe source include a Fe salt, such as $FeC_2O_4$, $(CH_3COO)_2Fe$, $FeCl_2$ and $FeBr_2$, examples of the Mn source include a Mn salt, such as $MnCl_2$, examples of Ni source include a Ni salt, such as NiCl, and examples of Co source include a Co salt, such as $Co_3O_4$. In the case where M is another element, a metallic salt of the corresponding element may be used.

Examples of the P source include $H_3PO_4$, $(NH_4)_2HPO_4$ and $NH_4H_2PO_4$.

The positive electrode active substance can be produced by mixing the raw materials at a target molar ratio and calcining them at a high temperature.

While the particle diameter of the positive electrode active substance is not particularly limited, the average particle diameter of primary particles thereof is generally about from 10 nm to 100 $\mu$m, and is preferably from 30 to 250 nm, and more preferably from 60 to 200 nm, from the standpoint of good electron conductivity. The average particle diameter of secondary particles is preferably 5 $\mu$m or less since the Brunauer-Emmett-Teller (which is hereinafter referred to as BET) specific surface area can be 10 $m^2/g$ and the contact area between $LiFePO_4$ and the carbon material as the conductive agent can be sufficiently increased.

The lithium phosphate may be used as it is as the positive electrode active substance, and the positive electrode active substance that has low electroconductivity, such as $LiFePO_4$, may be increased in electron conductivity by coating the particles thereof with carbon. The coated amount of carbon is preferably from 0.5 to 10 parts by weight per 100 parts by weight of the positive electrode active substance.

2. Binder and Dispersion Medium

The binder used may be any binder that is ordinarily used in a lithium secondary cell, and examples thereof include polyvinylidene fluoride (PVDF), polytetrafluoroethylene, polyvinyl chloride, polyvinylpyrrolidone and mixtures thereof. Among these, polyvinylidene fluoride is preferably used.

The dispersion medium used may be any dispersion medium that is ordinarily used in a lithium secondary cell, and examples thereof include N-methylpyrrolidone and toluene, with N-methylpyrrolidone being preferably used.

3. Conductive Agent

The conductive agent used in the invention has an average particle diameter of from 3 to 20 $\mu$m measured by a laser diffraction scattering method. The use of a conductive agent having an average particle diameter within the range enhances the flowability of the coating composition without the use of a solvent in a large amount and suppresses the viscosity thereof from being increased with the lapse of time, whereby the coating composition can be coated stably to improve the capabilities of the cell. In the case where the average particle diameter is less than 3 $\mu$m, the flowability of the coating composition is deteriorated, and in the case where the average particle diameter exceeds 20 $\mu$m, the capabilities of the cell are decreased. The average particle diameter of the conductive agent is preferably from 3 to 10 $\mu$m.

The form of the conductive agent may be any of a spherical (granular) form, a flaky form, a fibrous form and the like, and the conductive agent having a flaky form, a fibrous form or a mixture thereof is preferably used since the packing rate and the cohesiveness in the pressing step for producing the positive electrode can be improved to prevent defects, such as detachment, from occurring.

The conductive agent preferably has a BET specific surface area of from 8 to 30 $m^2/g$. In the case where the BET specific surface area is less than 8 $m^2/g$, the contact area with the active substance is decreased to increase the impedance largely. In the case where the BET specific surface area exceeds 30 $m^2/g$, the viscosity of the coating composition obtained is increased to make the coating operation difficult.

Preferred examples of the conductive agent include an electroconductive carbon substance, such as graphite and carbon fibers, since the aforementioned conditions are satisfied.

The conductive agent may be used solely or as a combination of two or more kinds of them.

The total amount of the conductive agent used is preferably from 0.1 to 15 parts by weight per 100 parts by weight of the positive electrode active substance.

In particular, it is preferred that a carbon material in a flaky form or a fibrous form having an average particle diameter of from 3 to 10 $\mu$m is added in an amount of from 1 to 2 parts by weight per 100 parts by weight of the positive electrode active substance since the advantages including improvement in flowability of the coating composition, suppression of increase in viscosity of the coating composition, enhancement of packing rate and cohesiveness in the pressing step for producing the positive electrode are obtained conspicuously.

At least one second conductive component selected from the group consisting of electroconductive carbon substances having an average particle diameter of 1 $\mu$m or less is preferably mixed to the conductive agent since the packing rate and the cohesiveness in the pressing step for producing the positive electrode can be improved to prevent defects, such as detachment, from occurring. The second conductive component preferably has a BET specific surface area of 50 $m^2/g$.

Examples of the second conductive component include an electroconductive carbon substance that has been ordinarily used as a conductive agent, such as carbon black and acetylene black.

4. Lithium Secondary Cell

The lithium secondary cell of the invention is constituted by the positive electrode for a lithium secondary cell of the invention, a negative electrode and an electrolyte layer.

The negative electrode is preferably one capable of occluding and releasing metallic lithium or lithium ion, and the material therefor is not particularly limited and may be a known material, such as an alloy and hard carbon.

Specifically, the negative electrode may contain a collector having coated thereon a material obtained by mixing a negative electrode active substance and a binder.

The negative electrode active substance may be a known active substance without particular limitation. Examples thereof include a carbon material, such as natural graphite, artificial graphite, non-graphitizable carbon and graphitizable carbon, a metallic material, such as metallic lithium, a lithium alloy and a tin compound, a lithium-transition metal nitride, a crystalline metallic oxide an amorphous metallic oxide, and an electroconductive polymer.

The binder may be a known organic or inorganic binder without particular limitation, and examples thereof include those shown for the binder that can be used in the positive electrode, such as polyvinylidene fluoride (PVDF).

Examples of the collector of the negative electrode include copper and nickel in the form of a mesh, a punching metal, a foamed metal, a foil processed into a plate, or the like.

The electrolyte layer is held with the positive electrode layer and the negative electrode layer and contains an electrolytic solution, a polymer containing an electrolytic salt, or a polymer gel electrolyte. In the case where an electrolytic solution or a polymer gel electrolyte is used, a separator is preferably used in combination. The separator electrically insulates the positive electrode and the negative electrode and retains an electrolytic solution or the like.

The electrolytic solution may be any electrolytic solution that is ordinarily used in a lithium secondary cell, and includes ordinary examples of an organic electrolytic solution and an ionic liquid.

Examples of the electrolytic salt include $LiPF_6$, $LiBF_4$, $LiClO_4$, $LiAsF_6$, $LiCl$, $LiBr$, $LiCF_3SO_3$, $LiN(CF_3SO_2)_2$, $LiC(CF_3SO_2)_3$, $LiI$, $LiAlCl_4$, $NaClO_4$, $NaBF_4$ and $NaI$, and particularly an inorganic lithium salt, such as $LiPF_6$, $LiBF_4$, $LiClO_4$ and $LiAsF_6$, and an organic lithium salt represented by $LiN(SO_2C_xF_{2x+1})(SO_2CyF_{2y+1})$, wherein x and y each represents an integer of 0 or from 1 to 4, provided that x+y is from 2 to 8.

Specific examples of the organic lithium salt include $LiN(SO_2F)_2$, $LiN(SO_2CF_3)(SO_2C_2F_5)$, $LiN(SO_2CF_3)(SO_2C_3F_7)$, $LiN(SO_2CF_3)(SO_2C_4F_9)$, $LiN(SO_2C_2F_5)_2$, $LiN(SO_2C_2F_5)(SO_2C_3F_7)$ and $LiN(SO_2C_2F_5)(SO_2C_4F_9)$.

Among these, $LiPF_6$, $LiBF_4$, $LiN(CF_3SO_2)_2$, $LiN(SO_2)_2$ and $LiN(SO_2C_2F_5)_2$ are preferably used as the electrolyte owing to the excellent electric characteristics thereof.

The electrolytic salt may be used solely or as a combination of two or more kinds of them.

The organic solvent for dissolving the electrolytic salt may be any organic solvent that is ordinarily used in a non-aqueous electrolytic solution of a lithium secondary cell without particular limitation, and examples thereof include a carbonate compound, a lactone compound, an ether compound a sulfolane compound, a dioxolane compound, a ketone compound, a nitrile compound and a halogenated hydrocarbon compound. Specific examples thereof include a carbonate compound, such as dimethyl carbonate, methylethyl carbonate, diethyl carbonate, ethylene carbonate, propylene carbonate, ethylene glycol dimethyl carbonate, propylene glycol dimethyl carbonate, ethylene glycol diethyl carbonate and vinylene carbonate, a lactone compound, such as γ-butyrolactone, an ether compound, such as dimethoxyethane, tetrahydrofuran, 2-methyltetrahydrofuran, tetrahydropyran and 1,4-dioxane, a sulfolane compound, such as sulfolane and 3-methylsulfolane, a dioxolane compound, such as 1,3-dioxolane, a ketone compound, such as 4-methyl-2-pentanone, a nitrile compound, such as acetonitrile, propionitrile, valeronitrile and benzonitrile, a halogenated hydrocarbon compound, such as 1,2-dichloroethane, and an ionic liquid, such as methyl formate, dimethylformamide, diethylformamide, dimethylsulfoxide, an imidazolium salt and a quaternary ammonium salt. The organic solvent may be a mixture of these solvents.

Among the organic solvents, at least one non-aqueous solvent selected from the group consisting of carbonate compounds is preferably contained since it is excellent in solubility of the electrolyte, dielectric constant and viscosity.

Examples of the polymer compound used in the polymer electrolyte or the polymer gel electrolyte include a polymer, a copolymer and a crosslinked product thereof of ether, ester, siloxane, acrylonitrile, vinylidene fluoride, hexafluoropropylene, acrylate, methacrylate, styrene, vinyl acetate, vinyl chloride, oxetane or the like, and the polymer may be used solely or as a combination of two or more kinds of them. The polymer structure is not particularly limited, and a polymer having an ether structure, such as polyethylene oxide, is particularly preferred.

In the lithium secondary cell, an electrolytic solution is housed in a cell container for a liquid system cell, a precursor liquid having a polymer dissolved in an electrolytic solution is housed therein for a gel system, or a polymer before crosslinking having an electrolytic salt dissolved therein is housed therein for a solid electrolyte system cell.

The separator may be any separator that is ordinarily used in a lithium secondary cell without particular limitation, and examples thereof include a porous resin formed of polyethylene, polypropylene, polyolefin, polytetrafluoroethylene or the like, ceramics and nonwoven fabric.

EXAMPLE

The invention will be described in more detail with reference to the following examples, but the invention is not limited to the examples.

Production of Positive Electrode

(1) Conductive Agent

As a conductive agent for producing a positive electrode, the materials disclosed in Table 1 below were used. Specifically, graphite (Graphite KS Series KS4, KS6, KS10 and KS15, produced by Timcal Graphite and Carbon, and Graphite SFG Series SFG6, SFG10 and SFG15, produced by Timcal Graphite and Carbon) and carbon fibers (VGCF-H, produced by Showa Denko Co. , Ltd.) were used as the conductive agent 1 (conductive carbon having an average particle diameter of from 3 to 20 $\mu$m used in Examples), and Carbon Black Super P (produced by Timcal Graphite and Carbon), Ketjen Black (a trade name) EC, EC600JD (produced by Lion Corporation), acetylene black (Denka Black (a trade name), produced by Denki Kagaku Kogyo Co. , Ltd.) were used as the conductive agents 2 and 3 (electroconductive carbon having an average particle diameter of 1 $\mu$m or less and a BET specific surface area of 50 $m^2$/g or more used in Examples and Comparative Examples).

The average particle diameters, the bulk densities, the specific surface areas and the forms of the conductive agents are shown in Table 1. The average particle diameter was measured by a laser diffraction scattering method with Microtrack Particle Size Analyzer, produced by Nikkiso Co., Ltd. The bulk density was calculated from a result obtained by measuring a mass of a powder sample placed in a container having a prescribed capacity. The specific surface area was measured by a constant volume gas adsorption method with an automatic specific surface area and fine pore distribution analyzer (produced by Bel Japan, Inc.).

Table 1

| Electroconductive carbon | Trade name | Average particle diameter | Bulk density ($g/cm^3$) | Specific surface area ($m^2$/g) | Form |
|---|---|---|---|---|---|
| acetylene black | Denka Black | 36 nm | 0.04 | 68 | |
| carbon black | EC | 40 nm | | 800 | |
| | Super P | 40 nm | 0.16 | 63 | |
| graphite | KS4 | 4.7 $\mu$m | 0.07 | 26 | granular |
| | KS6 | 6.5 $\mu$m | 0.07 | 20 | granular |
| | KS10 | 12.5 $\mu$m | 0.10 | 16 | granular |
| | KS15 | 17.2 $\mu$m | 0.10 | 12 | granular |
| | SFG6 | 6.5 $\mu$m | 0.07 | 17 | flaky |
| | SFG10 | 12.8 $\mu$m | 0.07 | 12 | flaky |
| | SFG15 | 17.9 $\mu$m | 0.09 | 9 | flaky |
| carbon fiber | VGCF-H | 5 to 10 $\mu$m | 0.08 | 13 | fibrous |

(2) Preparation of Coating Composition for Positive Electrode

Example 1

90 g of a positive electrode active substance $LiFePO_4$ (including coated carbon) and 4 g of graphite (Graphite KS4, produced by Timcal Graphite and Carbon) as the conductive agent 1 were mixed in a dry state with a mixer, and the resulting powder mixture was added to 54 g (solid content: 6 g) of PVDF (13% by weight NMP solution of KF Binder #9130, produced by Kureha Corporation) serving as a binder and dispersed therein with a planetary mixer. The mixture was diluted with 100 g of N-methyl-2-pyrrolidone to provide a coating composition for a positive electrode having a solid content of 40% by weight.

Examples 2 to 12 and Comparative Examples 1 to 4

Coating compositions for a positive electrode were obtained in the same manner as in Example 1 except that the materials shown in Table 2 were used as the conductive agent. The mixing ratio of the conductive agents (conductive agent 1/conductive agent 2/conductive agent 3 by weight) and the formulation of the coating composition (positive electrode active substance/conductive agent/binder by weight in terms of solid content) are shown in Table 2.

Table 2

| Example | Conductive agent 1 (average particle diameter: 3 $\mu$m or more) | Conductive agent 2 (average particle diameter: less than 3 $\mu$m) | Conductive agent 3 | Mixing ratio of conductive agents (conductive agent 1/ conductive agent 2/ conductive agent 3) | Formulation (active substance/ conductive agent/ binder) |
|---|---|---|---|---|---|
| Example 1 | KS4 | - | - | 4/0/0 | 90/4/6 |
| Example 2 | KS6 | - | - | 4/0/0 | 90/4/6 |
| Example 3 | KS10 | - | - | 4/0/0 | 90/4/6 |
| Example 4 | KS15 | - | - | 4/0/0 | 90/4/6 |
| Example 5 | SFG6 | - | - | 4/0/0 | 90/4/6 |
| Example 6 | SFG10 | - | - | 4/0/0 | 90/4/6 |
| Example 7 | SFG15 | - | - | 4/0/0 | 90/4/6 |
| Example 8 | VGCF-H | - | - | 4/0/0 | 90/4/6 |
| Example 9 | KS6 | Super P | - | 2/2/0 | 90/4/6 |
| Example 10 | SFG6 | Super P | - | 2/2/0 | 90/4/6 |
| Example 11 | VGCF-H | Super P | - | 2/2/0 | 90/4/6 |
| Example 12 | SFG15 | Super P | Ketjen Black EC | 2/1.5/0.5 | 90/4/6 |
| Comparative Example 1 | - | Super P | - | 0/4/0 | 90/4/6 |
| Comparative Example 2 | - | Denka Black | - | 0/4/0 | 90/4/6 |
| Comparative Example 3 | - | Ketjen Black EC | - | 0/4/0 | 90/4/6 |
| Comparative Example 4 | - | - | - | 0/0/0 | 90/0/10 |

The resulting coating compositions were measured for initial viscosity and viscosity after standing still for 3 hours, and the increasing rate (%) of viscosity was obtained by the following expression.

$$\text{(viscosity increasing rate after 3 hours) (\%)} =$$

$$\text{(viscosity after 3 hours) / (initial viscosity)} \times 100$$

The results are shown in Table 3. The viscosity was measured with a rotation viscometer (produced by Brookfield Engineering Laboratories, Inc.).

(3) Production and Evaluation of Positive Electrode

The coating composition thus obtained was coated on an aluminum foil (thickness: 20 $\mu$m) and dried with hot air. Thereafter, the coated layer was dried at 130°C under reduced pressure, and then subjected to roll pressing to provide a positive electrode having the positive electrode active substance in an amount of 8 mg/cm$^2$ (one surface). The resulting positive electrode was subjected to a compression adhesion test and a tape peeling test. The results obtained are shown in Table 3.

In the compression adhesion test, the positive electrodes were compressed under a prescribed constant pressure with a roll press for rolling, and the ratio (%) of the good electrodes that did not suffer peeling or the like but maintained good appearance among the electrodes subjected to the test was determined by the following expression.

$$\texttt{(ratio of good electrode) (\%) =}$$

$$\texttt{(number of good electrodes)/(number of total electrodes)}$$

$$\texttt{×100}$$

In the tape peeling test, the electrode was folded to 180°, a cellophane adhesive tape was adhered onto the fold line and then peeled off therefrom, and the state of adhesion between the collector foil and the positive electrode layer was evaluated by the following standard.

AA: completely no peeling found on folding line
A: slight peeling found on folding line
B: peeling found on most of folding line
C: peeling found on area over folding line

Production of Negative Electrode

90 g of mesocarbon microbeads (MCMB) (MCMB10-28, produced by Osaka Gas Chemicals Co., Ltd.) as a negative electrode active substance and 2 g of acetylene black (Denka Black, produced by Denki Kagaku Kogyo Co. , Ltd.) as a conductive agent were mixed in a dry state with a mixer, and the resulting powder mixture was added to 62 g (solid content: 8 g) of PVDF (13% by weight NMP solution of KF Binder #9130, produced by Kureha Corporation) serving as a binder and dispersed therein with a planetary mixer. The mixture was diluted with 45 g of N-methyl-2-pyrrolidone to provide a coating composition for a negative electrode having a solid content of 50% by weight.

The coating composition thus obtained was coated on an electrolytic copper foil (thickness: 10 $\mu$m) and dried with hot air. Thereafter, the coated layer was dried at 130°C under reduced pressure, and then subjected to roll pressing to provide a negative electrode having the negative electrode active substance in an amount of 5 mg/cm$^2$ (one surface).

Production of Lithium Secondary Cell

The positive electrode and the negative electrode obtained above were laminated with Celgard #2325 (produced by Celgard Co., Ltd.) as a separator intervening between them, and a positive electrode terminal and a negative electrode terminal were connected to the positive electrode and the negative electrode, respectively, by ultrasonic welding. The laminated body was housed in an aluminum laminate packaging material, which was heat-sealed with an opening for injecting an electrolytic solution remaining. Thus, a cell before injection of an electrolytic solution having a positive electrode area of 18 cm$^2$ and a negative electrode area of 19.8 cm$^2$ was obtained.

LiPF$_6$ was dissolved in a mixed solvent containing ethylene carbonate and diethyl carbonate to provide an electrolytic solution, which was injected in the cell, and the opening was heat-sealed to provide a cell for evaluation.

The resulting lithium secondary cell was evaluated for cell performance. The results obtained are shown in Table 3.

The 1/5 C discharge capacity was measured under the following conditions. The cell was charged with constant current (CC) at a current density of 0.22 mA/cm$^2$ (corresponding to 1/5 C) to 4.0 V, charged with constant voltage (CV) at 4.0 V for 1. 5 hours, and then discharged with CC at a current density of 0.22 mA/cm$^2$ (corresponding to 1/5 C) to 2.0 V. The cell capacity in this cycle was measured, and a value obtained by dividing the resulting cell capacity by the weight of the active substance was designated as a 1/5 C discharge capacity.

The 5 C discharge capacity holding ratio was measured under the following conditions. The cell was charged with constant current (CC) at a current density of 0.22 mA/cm$^2$ (corresponding to 1/5 C) to 4.0 V, charged with constant voltage (CV) at 4.0 V for 1.5 hours, and then discharged with CC at a current density of 5.4 mA/cm$^2$ (corresponding to 5 C) to 2.0 V. The discharge capacity was obtained in the same manner, and a ratio in terms of percent with respect to the 1/5 C discharge capacity was designated as a 5 C discharge capacity holding ratio.

$$\text{(5 C discharge capacity holding ratio) (\%) =}$$

$$\text{(5 C discharge capacity) / (1/5 C discharge capacity)} \times 100$$

The 1 C charge-discharge cycle holding ratio was measured under the following conditions. The cell was charged with constant current (CC) at a current density of 1.1 mA/cm$^2$ (corresponding to 1 C) to 4.0 V, charged with constant voltage (CV) at 4.0 V for 1.5 hours, and then discharged with CC at a current density of 1.1 mA/cm$^2$ (corresponding to 1 C) to 2.0 V. This cycle was repeated 300 times, and the ratio in terms of percent of the 1 C discharge capacity after 300 cycles to the initial 1 C discharge capacity was charge-designated as a 1 C discharge cycle holding ratio.

$$\text{(1 C charge-discharge cycle holding ratio) (\%) =}$$

$$\text{(1 C discharge capacity after 300 cycles)/(initial 1 C discharge capacity)}$$

$$\times\ 100$$

The cell impedance was obtained by measuring the cell for a resistance value at a frequency of 1 kHz with an impedance analyzer (produced by ZAHNER-Elektrik GmBH).

Table 3

| | Evaluation of coating composition | | | Evaluation of electrode | |
|---|---|---|---|---|---|
| | Solid content (% by weight) | Viscosity (cp) | Viscosity increasing rate after 3 hours (%) | Ratio of good electrode in compression adhesion test (%) | Tape peeling test |
| Example 1 | 45 | 3,200 | 160 | 80 | A |
| Example 2 | 45 | 2,800 | 160 | 100 | A |
| Example 3 | 45 | 2,800 | 150 | 100 | B |
| Example 4 | 45 | 2,200 | 140 | 100 | B |
| Example 5 | 45 | 2,400 | 150 | 100 | AA |
| Example 6 | 45 | 1,950 | 140 | 100 | AA |
| Example 7 | 45 | 1,760 | 140 | 100 | A |
| Example 8 | 45 | 3,800 | 150 | 100 | AA |
| Example 9 | 45 | 2,900 | 160 | 100 | A |
| Example 10 | 45 | 2,740 | 150 | 100 | A |
| Example 11 | 45 | 3,100 | 160 | 100 | A |
| Example 12 | 45 | 2,120 | 190 | 100 | A |
| Comparative Example 1 | 40 | 3,900 | 300 | 60 | A |
| Comparative Example 2 | 38 | 4,100 | 380 | 50 | A |
| Comparative Example 3 | 32 | 3,860 | 230 | 30 | C |
| Comparative Example 4 | 45 | 3,130 | 150 | 80 | A |

(continued)

Table 3 (continued)

| | Evaluation of cell capabilities | | | |
|---|---|---|---|---|
| | 1/5 C discharge capacity (mAh/g) | 5 C discharge holding ratio (%) | 1 C charge-discharge cycle holding ratio (%) | Cell impedance (mΩ/1 kHz) |
| Example 1 | 131 | 55 | 72 | 1,120 |
| Example 2 | 132 | 60 | 75 | 1,110 |
| Example 3 | 132 | 58 | 72 | 1,030 |
| Example 4 | 131 | 55 | 70 | 779 |
| Example 5 | 131 | 64 | 78 | 720 |
| Example 6 | 132 | 62 | 75 | 880 |
| Example 7 | 133 | 58 | 71 | 943 |
| Example 8 | 133 | 69 | 75 | 636 |
| Example 9 | 132 | 75 | 77 | 635 |
| Example 10 | 133 | 81 | 80 | 617 |
| Example 11 | 133 | 80 | 79 | 580 |
| Example 12 | 131 | 76 | 72 | 990 |
| Comparative Example 1 | 132 | 67 | 70 | 776 |
| Comparative Example 2 | 131 | 62 | 72 | 710 |
| Comparative Example 3 | - | - | - | - |
| Comparative Example 4 | 131 | 57 | 75 | 1,320 |

As shown in Table 3, the coating compositions of Examples 1 to 12 had a low viscosity and high flowability and were excellent in time-lapse stability. The electrodes obtained from the coating compositions of Examples 1 to 12 were excellent in adhesion, were excellent in results of the tape peeling test, and were excellent in cell capabilities. On the other hand, the coating compositions of Comparative Examples 1 to 3 using only the conductive agent 2 had a high initial viscosity and the viscosity increasing rate. The electrodes obtained from the coating compositions of Comparative Examples 1 to 3 and the coating composition of Comparative Example 4 containing no conductive agent were considerably poor in adhesion.

The positive electrode for a lithium secondary cell of the invention useful not only for an electric power source of a portable device, but also for a large-scale or medium-scale lithium secondary cell, which is applied to an electric power source of an electric bicycle, an electric wheelchair, a robot, an electric automobile and the like, an emergency electric power source, a large capacity stationary electric power plant.

## Claims

1. A coating composition for a positive electrode for a lithium secondary cell, the coating composition comprising $Li_xFePO_4$, wherein $0<x<2$ as a positive electrode active substance, a conductive agent and a binder, the conductive agent having an average particle diameter of from 3 to 20 $\mu$m measured by a laser diffraction scattering method, the average particle diameter of primary particles of the positive electrode active substance being from 30 to 250nm, and the average particle diameter of secondary particles of the positive electrode active substance being 5 $\mu$m or less.

2. The coating composition for a positive electrode for a lithium secondary cell as claimed in claim 1, wherein the conductive agent is at least one member selected from the group consisting of electroconductive carbon substances in a flaky form or a fibrous form.

3. The coating composition for a positive electrode for a lithium secondary cell as claimed in claim 1 or 2, wherein the positive electrode further comprises, along with the conductive agent, at least one second conductive component selected from the group consisting of electroconductive carbon substances having an average particle diameter of 1 $\mu$m or less measured by a laser diffraction scattering method.

4. A positive electrode for a lithium secondary cell obtained by employing the coating composition as claimed in one of claims 1 to 3.

5. A lithium secondary cell comprising the positive electrodes for a lithium secondary cell as claimed in claim 4.

## Patentansprüche

1. Beschichtungszusammensetzung für eine positive Elektrode einer Lithiumsekundärzelle, wobei die Beschichtungszusammensetzung Folgendes umfasst:

   $Li_xFePO_4$, wobei $0<x<2$, als aktive Substanz der positiven Elektrode, ein leitfähiges Mittel und ein Bindemittel, wobei das leitfähige Mittel einen durchschnittlichen Partikeldurchmesser von 3 bis 20 $\mu$m, gemessen durch ein Laserbeugungs-Streuverfahren, aufweist, wobei der durchschnittliche Partikeldurchmesser von Primärpartikeln der aktiven Substanz der positiven Elektrode von 30 bis 250 nm beträgt und der durchschnittliche Partikeldurchmesser von Sekundärpartikeln der aktiven Substanz der positiven Elektroden 5 $\mu$m oder weniger beträgt.

2. Beschichtungszusammensetzung für eine positive Elektrode für eine Lithiumsekundärzelle nach Anspruch 1, wobei es sich bei dem leitfähigen Mittel um mindestens ein Element handelt, das aus der aus elektrisch leitfähigen Kohlenstoffsubstanzen in Plättchenform oder Faserform bestehenden Gruppe ausgewählt wird.

3. Beschichtungszusammensetzung für eine positive Elektrode für eine Lithiumsekundärzelle nach Anspruch 1 oder 2, wobei die positive Elektrode neben dem leitfähigen Mittel weiter mindestens eine zweite leitfähige Komponente umfasst, die aus der aus elektrisch leitfähigen Kohlenstoffsubstanzen mit einem durchschnittlichen Partikeldurchmesser von 1 $\mu$m oder weniger, gemessen durch ein Laserbeugungs-Streuverfahren, bestehenden Gruppe ausgewählt wird.

4. Positive Elektrode für eine Lithiumsekundärzelle, die durch Einsetzen der Beschichtungszusammensetzung nach einem der Ansprühe 1 bis 3 erhalten wird.

5. Lithiumsekundärzelle, umfassend die positiven Elektroden für eine Lithiumsekundärzelle nach Anspruch 4.

**Revendications**

1. Composition de revêtement pour une électrode positive pour un accumulateur au lithium, la composition de revêtement comprenant du $Li_xFePO_4$, dans laquelle $0 < x < 2$, comme substance active de l'électrode positive, un agent conducteur et un liant, l'agent conducteur ayant un diamètre particulaire moyen de 3 à 20 $\mu$m mesuré par une méthode de diffusion/diffraction laser, le diamètre particulaire moyen des particules primaires de la substance active de l'électrode positive étant de 30 à 250 nm, et le diamètre particulaire moyen des particules secondaires de la substance active de l'électrode positive étant de 5 $\mu$m ou moins.

2. Composition de revêtement pour une électrode positive pour un accumulateur au lithium selon la revendication 1, dans laquelle l'agent conducteur est au moins un élément choisi parmi le groupe composé de substances à base de carbone électroconductrices sous forme lamellaire ou sous forme fibreuse.

3. Composition de revêtement pour une électrode positive pour un accumulateur au lithium selon la revendication 1 ou 2, dans laquelle l'électrode positive comprend en outre, avec l'agent conducteur, au moins un second composé conducteur choisi parmi le groupe composé de substances à base de carbone électroconductrices ayant un diamètre particulaire moyen de 1 $\mu$m ou moins mesuré par une méthode de diffusion/diffraction laser.

4. Électrode positive pour un accumulateur au lithium obtenue en utilisant la composition de revêtement selon l'une quelconque des revendications 1 à 3.

5. Accumulateur au lithium comprenant les électrodes positives pour un accumulateur au lithium selon la revendication 4.

**EP 2 113 957 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002216770 A
- JP 2002117902 A
- JP 2002117907 A
- JP 2006128119 A
- EP 1184920 A
- EP 1881546 A